# EUROPEAN PATENT APPLICATION

(11) **EP 4 106 481 A1**
(43) Date of publication of application: **21.12.2022**
(21) Application number: 21753809.9
(22) Date of filing: 07.02.2021
(51) Int. Cl.: H04W 76/14

(54) **SIDELINK ESTABLISHMENT METHOD AND RELATED DEVICE**

(30) Priority: 11.02.2020 CN 202010087803
(71) Applicant: Spreadtrum Communications (Shanghai) Co., Ltd., Shanghai 201203 (CN)
(72) Inventor: XU, Min, Shanghai 201203 (CN); LIU, Xing, Shanghai 201203 (CN)
(74) Representative: Huang, Liwei
(86) International application number: PCT/CN2021/075878
(87) International publication number: WO 2021/160072

(57) **Abstract**

Embodiments of the disclosure provide a method for establishing a sidelink and related devices. The method includes transmitting, by a first access network device, first indication information to a first terminal device, where the first indication information instructs the first terminal device to trigger a sidelink establishment procedure. With this disclosure, power of the terminal device and radio resources can be saved.

## Description

### CROSS-REFERENCE TO RELATED APPLICATION(S)

This application claims priority to Chinese Patent Application No. 202010087803.0, filed February 11, 2020, entitled "METHOD FOR ESTABLISHING SIDELINK AND RELATED DEVICES", the entire disclosure of which is hereby incorporated by reference.

### TECHNICAL FIELD

This disclosure relates to the field of communication technology, and in particular to a method for establishing a sidelink and related devices.

### BACKGROUND

Vehicle to everything (vehicle to X, or referred to as V2X) is a key technology for future intelligent transportation systems, which mainly focuses on vehicle data transmission schemes based on the 3rd Generation Partnership Project (3GPP) communication protocols. V2X communication includes Vehicle to Vehicle (V2V) communication, Vehicle to Infrastructure (V2I) communication, and Vehicle to Pedestrian (V2P) communication. V2X applications will improve driving safety, reduce congestion and vehicle energy consumption, improve traffic efficiency and in-vehicle infotainment. In addition to the field of vehicle communication, the V2X communication schemes can also be applied to other communication schemes for user terminals, such as in any Proximity-based Services (ProSe) scenario.

In V2X communication, V2V communication is different from ordinary wireless cellular network communication. In a traditional cellular network, terminal devices communicate with each other via a Uu interface through a base station, a core network, and the like. In V2V communication, terminal devices can communicate with each other directly via a PC5 interface. A link used for direct communication between terminal devices is a sidelink (SL). Due to limited transmit power of the terminal device, the terminal device has a limited transmission range. If a distance between the terminal devices exceeds the corresponding transmission range, the sidelink cannot be used for transmission. Instead, a Uu link with the base station is required to be established for communication and data transmission. Before establishing the sidelink, the terminal device needs to perform sidelink discovery to find a peer terminal device and transmit necessary information for establishing the sidelink. The user terminal selects different transmission paths mainly according to a policy configured by a core network device. For example, when the terminal device switches to a certain cell, or when a link based on the Uu interface cannot meet specified requirements for data transmission of the current terminal device, the terminal device performs the sidelink discovery based on a radio resource allocated by the access network device. After the terminal device successfully establishes the sidelink, the terminal device will send request to the core network node or the core network node will trigger release of data transmission link in the Uu path. The base station will not participate in triggering of sidelink establishment or release procedure. However, in many cases, because real-time precise locations of the terminal devices between which the sidelink needs to be established cannot be obtained, the peer terminal device may be out of a transmission range in which the sidelink can be established, so that the local terminal device is unable to receive a response from the peer terminal device, resulting in continuous sidelink discovery procedures, which consumes a large amount of power of the local terminal device and wastes radio resources.

### SUMMARY

The disclosure provides a method for establishing a sidelink and related devices, which can save power of the terminal device and radio network resources.

According to a first aspect, a method for transferring service data is provided. The method includes: transmitting, by a first access network device, first indication information to a first terminal device, the first indication information instructing the first terminal device to trigger a sidelink establishment procedure.

Optionally, transmitting, by the first access network device, the first indication information to the first terminal device includes: obtaining, by the first access network device, terminal location information of the first terminal device; and transmitting, by the first access network device, the first indication information to the first terminal device according to the terminal location information of the first terminal device.

Optionally, obtaining, by the first access network device, the terminal location information of the first terminal device includes: obtaining, by the first access network device, one or two of: global positioning system (GPS) information of the first terminal device, a zone ID of the first terminal device, a power reference signal of the first terminal device, and beam information of the first terminal device.

Optionally, prior to transmitting, by the first access network device, the first indication information to the first terminal device, the method further includes: receiving, by the first access network device, first sidelink information transmitted from a core network device or the first terminal device. Transmitting, by the first access network device, the first indication information to the first terminal device includes: transmitting, by the first access network device, the first indication information to the first terminal device according to the first sidelink information.

Optionally, the first sidelink information includes one or more of: a temporary mobile subscriber identity (TMSI), a radio network temporary identity (RNTI), an international mobile subscriber identity (IMSI), a flow identity (ID), a data radio bearer (DRB) ID, a destination ID, or a source ID.

Optionally, the first indication information carries one or more of: a flow ID, a DRB ID, a destination ID, or a source ID.

Optionally, the first indication information instructs the first terminal device to trigger the sidelink establishment procedure with a second terminal device. The method further includes: receiving, by the first access network device, terminal location information of a second terminal device transmitted by a second access network device, the second access network device being an access network device connected with the second terminal device. Transmitting, by the first access network device, the first indication information to the first terminal device according to the terminal location information of the first terminal device includes: transmitting, by the first access network device, the first indication information to the first terminal device according to the terminal location information of the first terminal device and the terminal location information of the second terminal device.

Optionally, the first indication information carries a first gap ID and/or a first resource ID, where the first gap ID indicates a gap in which the first terminal device establishes the sidelink establishment procedure, and the first resource ID indicates a radio resource with which the first terminal device establishes the sidelink establishment procedure.

Optionally, the first indication information is one of a radio resource control (RRC) message, media access control (MAC) control element (CE) information, or downlink control information (DCI).

Optionally, the method further includes: transmitting, by the first access network device, the first sidelink information to a third access network device, the third access network device being an access network device to which a connection is switched by the first terminal device.

According to a second aspect, a method for establishing a sidelink is provided. The method includes: receiving, by a first terminal device, first indication information from a first access network device; and triggering, by the first terminal device, a sidelink establishment procedure according to the first indication information.

Optionally, the method further includes: transmitting, by the first terminal device, terminal location information of the first terminal device to the first access network device.

Optionally, the terminal location information of the first terminal device includes one or two of: global positioning system (GPS) information of the first terminal device, a zone ID of the first terminal device, a power reference signal of the first terminal device, and beam information of the target terminal device.

Optionally, the first indication information is transmitted by the first access network device according to first sidelink information. Prior to receiving, by the first terminal device, the first indication information from the first access network device, the method further comprises: transmitting, by the first terminal device, the first sidelink information to the first access network device.

Optionally, the first sidelink information includes one or more of: a temporary mobile subscriber identity (TMSI), a radio network temporary identity (RNTI), an international mobile subscriber identity (IMSI), a flow identity (ID), a data radio bearer (DRB) ID, a destination ID, or a source ID.

Optionally, the first indication information carries one or more of: a flow ID, a DRB ID, a destination ID, or a source ID.

Optionally, the first indication information carries a first gap ID and/or a first resource ID, where the first gap ID indicates a gap in which the first terminal device establishes the sidelink establishment procedure, and the first source ID indicates a radio resource with which the first terminal device establishes the sidelink establishment procedure.

Optionally, the first indication information is one of a radio resource control (RRC) message, media access control (MAC) control element (CE) information, or downlink control information (DCI).

According to a third aspect, a first access network device is provided. The first access network device includes an indication-information transmitting module configured to transmit first indication information to a first terminal device, where the first indication information instructs the first terminal device to trigger a sidelink establishment procedure.

According to a fourth aspect, a first terminal device is provided. The first terminal device includes an indication-information receiving module configured to receive first indication information from a first access network device, and a triggering module configured to trigger a sidelink establishment procedure according to the first indication information.

According to a fifth aspect, a communication device is provided. The communication device includes a processor and a memory coupled with the processor and storing program codes, where the processor is configured to invoke the program codes to perform the method of any of the above aspects.

According to a sixth aspect, a computer storage medium is provided. The computer storage medium stores a computer program which, when executed by a processor, causes the processor to perform the method of any of the above aspects.

According to a seventh aspect, a computer program product is provided. The computer program product includes program codes which, when executed by a computer, cause the computer to perform the method of any of the above aspects.

In embodiments of the disclosure, the first access network device transmits the first indication information to the first terminal device, where the first indication information instructs the first terminal device to trigger the sidelink establishment procedure. Under the trigger by the first indication information, the first terminal device triggers the sidelink establishment procedure without continuously transmitting a request message for establishing the sidelink, thereby saving power of the first terminal device and radio resources.

### BRIEF DESCRIPTION OF THE DRAWINGS

FIG. 1 is a schematic structural diagram of a system for establishing a sidelink provided in embodiments of the disclosure.
FIG. 2 is a schematic flowchart of a method for establishing a sidelink provided in embodiments of the disclosure.
FIG. 3 is a schematic flowchart of another method for establishing a sidelink provided in embodiments of the disclosure.
FIG. 4 is a schematic flowchart of another method for establishing a sidelink provided in embodiments of the disclosure.
FIG. 5 is a schematic structural diagram of a first access network device provided in embodiments of the disclosure.
FIG. 6 is a schematic structural diagram of a first terminal device provided in embodiments of the disclosure.
FIG. 7 is a schematic structural diagram of a communication network device provided in embodiments of the disclosure.

### DETAILED DESCRIPTION

The technical solutions in embodiments of the disclosure will be clearly and completely described below with reference to the accompanying drawings in embodiments of the disclosure. Obviously, the described embodiments are only a part but not all of the embodiments of the disclosure. Based on the embodiments in the disclosure, all other embodiments obtained by those of ordinary skill in the art without creative efforts shall fall within the protection scope of the disclosure.

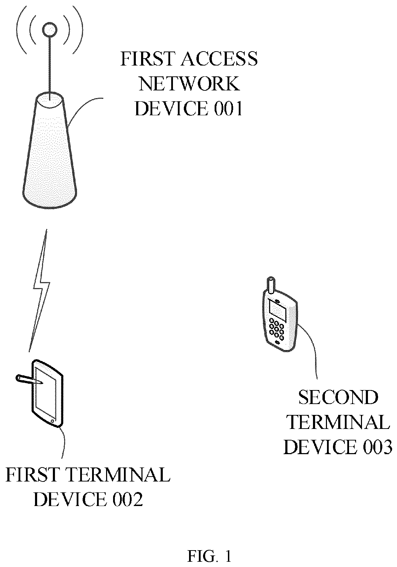

First, a system architecture is introduced. Referring to FIG. 1, FIG. 1 is a schematic structural diagram of a system for establishing a sidelink provided in embodiments of the disclosure. As illustrated in FIG. 1, the system may include a first access network device 001, a first terminal device 002, and a second terminal device 003. The first terminal device 002 is located in a cell of the first access network device 001, and the second terminal device 003 may be located in the cell of the first access network device 001, or may be located in other cells. The method for establishing a sidelink provided in embodiments of the disclosure may be implemented based on the system architecture shown in FIG. 1. The first access network device 001 may transmit first indication information to the first terminal device 002, where the first indication information may instruct the first terminal device 001 to trigger the sidelink establishment procedure with the second user terminal 002.

The above system may be a fifth-generation (5G) communication system, a fourth-generation (4G) and third-generation (3G) communication systems, and may also be various new communication systems in the future, such as 6G and 7G. The above system is suitable for different network architectures, including but not limited to relay network architecture, dual-link architecture, Vehicle-to-Everything architecture and the like.

The first access network device 001 may include various forms of network devices, such as a macro base station, a micro base station (also referred to as a small cell), a relay station, an access point, a cell, and the like. The base station may be a device that provides base station functions in a 2G network, including a base transceiver station (BTS), may be a device that provides base station functions in a 3G network, including Node B (NodeB), may be a device that provides base station functions in a 4G network, including evolved NodeB (eNB), may be a device that provides base station functions in a wireless local area network (WLAN), including an access point (AP), or may be a device that provides base station functions in a 5G new radio (NR) network, including a gNB or a ng-eNB. The gNB communicates with the terminal through NR technology, and the ng-eNB communicates with the terminal through Evolved Universal Terrestrial Radio Access (E-UTRA) technology. Both gNB and ng-eNB can be connected to the 5G core network. The base station may also be a device that provide base station functions in future new communication systems.

In addition, the base station may also be a transmission receive point (TRP), a central unit (CU), or other network entities. In addition, in a distributed base station scenario, the first access network device 001 may be a baseband unit (BBU) and a remote radio unit (RRU). In a cloud radio access network (CRAN) scenario, the first access network device 001 may be a baseband pool (BBU pool) and a radio frequency unit (RRU). In addition, the first access network device 001 may also be a mobility management entity (MME) device, an access and mobility management function (AMF) device, a V2X control function (CF) device, a GateWay, a roadside unit (RSU), an operation administration and maintenance (OAM) device, an application server (APP server) or a third-party network element.

The terminal device (including the first terminal device 002 and the second terminal device 003) may also be referred to as access terminal, terminal, subscriber unit, subscriber station, mobile station, remote station, remote terminal, terminal equipment, mobile device, user terminal, wireless network device, user agent, gateway device or user equipment, etc. The terminal device may be a cellular phone, a cordless phone, a session initiation protocol (SIP) phone, a wireless local loop (WLL) station, a personal digital assistant (PDA), a handheld device capable of wireless communication, a computing device or other devices connected to wireless modems, an in-vehicle device, a wearable device or a terminal device in Internet of Things or V2X network, and any form of terminal device in future networks, etc. The first access network device 001 and the first terminal device 002 may establish a connection based on uplink and downlink. In embodiments of the disclosure, a unidirectional communication link from an access network device to a terminal device is called a downlink, and a unidirectional communication link from a terminal device to an access network device is called an uplink.

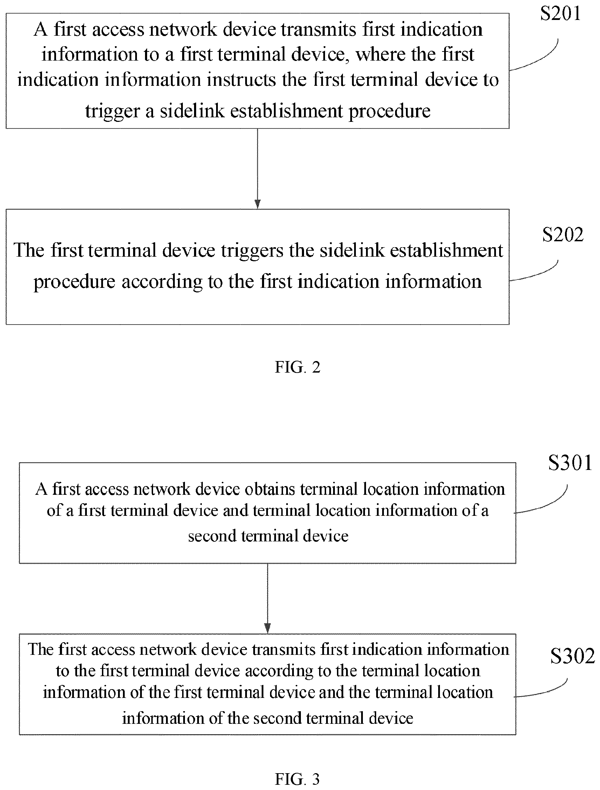

In the following, a method for establishing a sidelink provided in embodiments of the disclosure will be introduced. Referring to FIG. 2, FIG. 2 is a schematic flowchart of a method for establishing a sidelink provided in embodiments of the disclosure. As illustrated in FIG. 2, the method includes operations at S201-S202.

S201, a first access network device transmits first indication information to a first terminal device, where the first indication information instructs the first terminal device to trigger a sidelink establishment procedure.

Specifically, before S201, the first access network device may be configured with connection information related to the first terminal device. The connection information includes first sidelink information which may indicate an identifier (ID) of a peer terminal device with which the first terminal device establishes the sidelink (denoted as a second terminal device) and/or an ID of a service between the first terminal device and the second terminal device. The first sidelink information may contain information related to one or more terminal devices with which the first terminal device establishes sidelinks. Optionally, the first sidelink information may also contain information related to one or more sidelinks that the first terminal device needs to establish, such as quality of service (QoS) requirement parameter, type of ProSe service, etc. In one example, the first sidelink information may be configured by the first terminal device to the first access network device. In another example, the first sidelink information may be transmitted by a core network device to the first access network device.

The first sidelink information may include a temporary mobile subscriber identity (TMSI) of the second terminal device, an international mobile subscriber identity (IMSI), a radio network temporary identity (RNTI) of the second terminal device, a flow identity (ID) of a sidelink service that the first terminal device needs to establish, a data radio bearer (DRB) ID, a destination ID or a source ID of the sidelink service between the first terminal device and the second terminal device. The RNTI may be a cell-RNTI or other RNTI identifying a terminal device. According to the TMSI, IMSI or RNTI, the first access network device can determine the second terminal device, with which the first terminal device needs to establish the sidelink, configured by the core network device or the first terminal device. A ID of service carried through the sidelink that needs to be established by the first terminal device may be determined according to one or more of the flow ID, the DRB ID, the destination ID, or the source ID.

The first access network device stores the first sidelink information, and determines whether to transmit the first indication information when a certain condition is met, the first indication information instructs the first terminal device to trigger the sidelink establishment procedure.

In some implementations, the access network device can obtain terminal location information of the first terminal device, and determine whether the first terminal device satisfies the condition for triggering the sidelink establishment procedure according to the terminal location information of the first terminal device. The terminal location information of the first terminal device may be global positioning system (GPS) information reported by the first terminal device to the first access network device. The first access network device may determine a location of the first terminal device according to the GPS information of the first access network device. The terminal location information may be a zone ID of the first terminal device. For example, the network may divide physical locations into different groups, each group with a unique zone ID. The first terminal device may report the zone ID corresponding to the group to which it belongs as the zone ID of the first terminal device to the first access network device. The first access network device may determine the location where the first terminal device is located according to the zone ID. The terminal location information of the first terminal device may also be a power reference signal and beam information of the first terminal device. The power reference signal may be a reference signal receiving power (RSRP) of the first terminal device. The beam information may be information about a beam used by the first terminal device to interact with the base station. The first access network device can determine an azimuth angle of the first terminal device with respect to the first access network device according to the information about the beam used by the first terminal device, and determine a distance between the first terminal device and the first access network device according to the RSRP of the first terminal device. The first access network device then determines the location of the first terminal device according to the azimuth angle and the distance. Further, the first access network device may obtain terminal location information of the second terminal device that is expected to establish a sidelink with the first terminal device, determine a location of the second terminal device, and determine a distance between these two terminals in combination with the location of the first terminal device, so as to determine whether a sidelink can be established between the two terminal devices.

After the first access network device determines, according to the terminal location information of the first terminal device, that the first terminal device satisfies the condition for triggering the sidelink establishment procedure, the first access network device transmits the first indication information to the first terminal device, where the first indication information instructs the first terminal device to trigger the sidelink establishment procedure. The first indication information may be one of a radio resource control (RRC) message, a media access control (MAC) control element (CE) information, or downlink control information (DCI).

At S202, the first terminal device triggers the sidelink establishment procedure according to the first indication information.

Upon receiving the first indication information, the first terminal device triggers the sidelink establishment procedure and starts sidelink discovery. The first terminal device may broadcast a sidelink discovery message within a first gap specified by the first access network device, based on a radio resource allocated by the first access network device. Before the first access network device allocates the radio resource and the first gap to the first terminal device, the first terminal device may transmit SL UE information to the first access network device for requesting the base station to allocate the radio resource and/or gap required for the discovery and transmit information about the radio resource and/or gap. The base station may allocate the radio resource and/or the first gap to the first terminal device according to a radio frequency (RF) ability parameter and a discovery performance parameter of the first terminal device.

Optionally, the radio resource allocated and the first gap specified to the first terminal device may be configured by the first access network device for the first terminal device before reception of the first indication information. The first terminal device is activated through the first indication information to trigger the sidelink discovery within the specified first gap using the radio resource allocated. Optionally, the radio resource allocated to the first terminal device may be configured by the first access network device for the first terminal device before reception of the first indication information, and the first gap may be indicated by a first gap ID contained in the first indication information. After receiving the first indication information, within the first gap indicated by the first gap ID in the first indication information, the first terminal device triggers the sidelink discovery using the radio resource configured by the first access network device. Optionally, the first gap may be configured by the first access network device for the first terminal device before reception of the first indication information, and the radio resource allocated to the first terminal device may be indicated by a first resource ID contained in the first indication information. After receiving the first indication information, using the radio resource indicated by the first resource ID in the first indication information, the first terminal device triggers the sidelink discovery procedure within the first gap configured by the first access network device. Optionally, both the first gap ID corresponding to the first gap and the first resource ID corresponding to the radio resource allocated to the first terminal device may be contained in the first indication information and configured for the first terminal device through the first indication information. After receiving the first indication information, the first terminal device triggers the sidelink discovery within the first gap indicated by the first gap ID in the first indication information using the radio resource corresponding to the first resource ID in the first indication information.

Optionally, the first indication information may further carry one or more of a flow ID, a DRB ID, a destination ID, or a source ID. The above information may be included in the first indication information correspondingly by the first access network device according to information included in the first sidelink information. The first terminal device may determine which one or more services are to be transmitted through sidelink, and determine the sidelink that needs to be established. Once established, data of the service(s) is transmitted through the sidelink.

In embodiments of the disclosure, the first access network device transmits the first indication information to the first terminal device, and the first terminal device triggers the sidelink establishment procedure according to the first indication information. Under trigger of the first indication information, the first terminal device triggers the sidelink establishment procedure without continuously transmitting a request message for establishing the sidelink, thereby saving power of the first terminal device and radio resources.

Referring to FIG. 3, FIG. 3 is a schematic flowchart of another method for establishing a sidelink provided in embodiments of the disclosure. As illustrated in FIG. 3, the method may include operations at S301-S302.

At S301, a first access network device obtains terminal location information of a first terminal device and terminal location information of a second terminal device.

The first terminal device is in a cell of the first access network device. The first access network device may determine the terminal location information of the first terminal device through GPS information of the first terminal device, a zone ID of the first terminal device, or a power reference signal and beam information of the first terminal device.

In case that the second terminal device is in the cell of the first access network device, the first access network device may obtain the terminal location information of the second terminal device in a similar way to obtaining the terminal location information of the first terminal device. In case that the second terminal device is out of the cell of the first access network device, the first access network device may receive the terminal location information of the second terminal device from a second access network device, where the second access network device corresponds to a cell where the second terminal device is located. In one example, the second access network device may obtain the terminal location information of the second terminal device in a similar way to the first access network device obtaining the terminal location information of the first terminal device, and then transmits the terminal location information of the second terminal device to the first access network device. Optionally, before receiving the terminal location information of the second terminal device from the second access network device, the first access network device may transmit a request for the terminal location information of the second terminal device to the second access network device according to an ID of the second terminal device. After receiving the request for the terminal location information, the second access network device may transmit the terminal location information of the second terminal device to the first access network device according to the request for the terminal location information.

At S302, the first access network device transmits first indication information to the first terminal device according to the terminal location information of the first terminal device and the terminal location information of the second terminal device.

Specifically, the first access network device may determine a distance between the first terminal device and the second terminal device according to the terminal location information of the first terminal device and the terminal location information of the second terminal device, and then determine whether the distance meets a distance condition for establishing a sidelink. If the distance meets the distance condition, the first indication information will be transmitted to the first terminal device. In this way, it can be ensured that the first indication information instructs first terminal device to trigger the sidelink establishment procedure when the distance between the first terminal device and the second terminal device is within a maximum distance corresponding to transmit powers of the first terminal device and the second terminal device. For example, the first access network device calculates the distance between the first terminal device and the second terminal device according to GPS location information of the first terminal device and the second terminal device. For another example, the first access network device determines whether the first terminal device and the second terminal are in a same zone or adjacent zones according to zone IDs of the first terminal device and the second terminal device. For another example, the first access network device determines whether the first terminal device and the second terminal are in a same beam direction according to beam information and signal strengths of the first terminal device and the second terminal device, and determines the distance between the first terminal device and the second terminal according to the signal strengths, so as to determine whether the terminal devices can communication directly with each other.

Optionally, the first access network device may transmit second indication information to the second terminal device according to the terminal location information of the first terminal device and the terminal location information of the second terminal device. Optionally, if the first terminal device is in the cell of the second access network device, the first access network device may transmit the second indication information to the second terminal device through the second access network device. The second indication information instructs the second terminal device to trigger a sidelink establishment procedure.

In embodiments of the disclosure, the first access network device transmits the first indication information to the first terminal device according to the terminal location information of the first terminal device and the terminal location information of the second terminal device, so that the first terminal device triggers the sidelink establishment procedure when the distance between the first terminal device and the second terminal device is within the maximum distance corresponding to transmit powers of the first terminal device and the second terminal device. In this way, the first terminal device does not need to continuously transmit a request message for establishing the sidelink, thereby saving power of the first terminal device and radio resources.

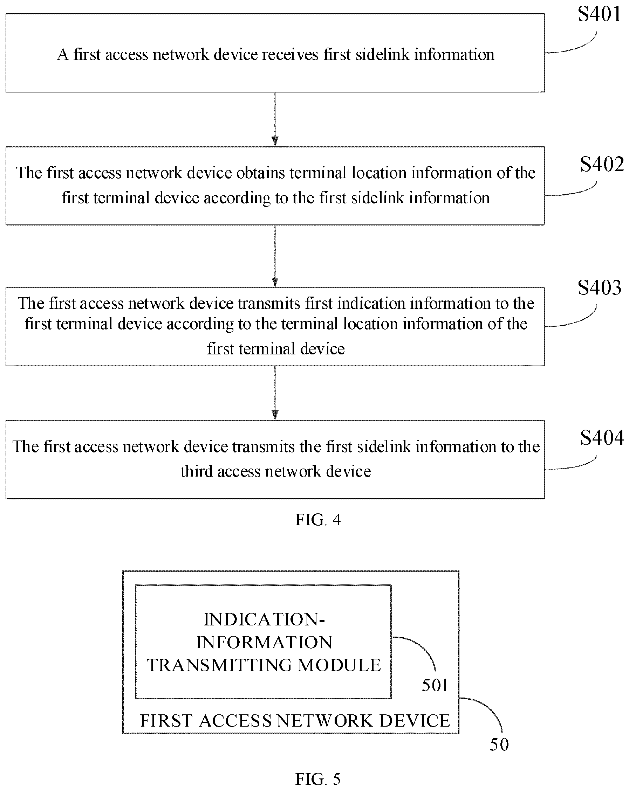

Referring to FIG. 4, FIG. 4 is a schematic flowchart of another method for establishing a sidelink provided in embodiments of the disclosure. As illustrated in FIG. 4, the method may include operations at S401-S404.

At S401, a first access network device receives first sidelink information.

The first sidelink information may be transmitted to the first access network device by a first terminal device, a core network device, or another access network device, where the another access network device is an access network device to which the first access network device is connected before switching to a cell of the first access network device. The first sidelink information may include one or more of a TMSI, an IMSI, an RNTI, a flow ID, a DRB ID, a destination ID, or a source ID. The first access network device may determine, according to the TMSI, IMSI or RNTI, a peer terminal device that is expected to establish a sidelink with the first terminal device. The first access network device may determine, according to the flow ID, DRB ID, destination ID, or source ID, information about the sidelink that the first terminal device needs to establish and an ID of service carried in the sidelink.

At S402, the first access network device obtains terminal location information of the first terminal device according to the first sidelink information.

The first access network device may determine the terminal location information of the first terminal device through GPS information of the first terminal device, a zone ID of the first terminal device, or a power reference signal and beam information of the first terminal device.

At S403, the first access network device transmits first indication information to the first terminal device according to the terminal location information of the first terminal device.

The first indication information instructs the first terminal device to trigger a sidelink establishment procedure. Upon receiving the first indication information, the first terminal device broadcasts a sidelink discovery message based on a radio resource and a first gap allocated by the first access network device. Before or in operations at S403, the first terminal device is in the cell of the first access network device. After operations at S403, the first terminal device may move and switch to a cell of a third access network device.

At S404, the first access network device transmits the first sidelink information to the third access network device.

During handover procedure of the first terminal device to the cell of the third access network device, the first access network device may transmit the first sidelink information to the third access network device. The third access network device may thus obtain the terminal location information of the first access network device, and transmit indication information for triggering the sidelink establishment procedure to the first terminal device according to the terminal location information of the first access network device and/or the terminal location information of the second terminal device.

In embodiments of the disclosure, after receiving the first sidelink information, the first access network device obtains the terminal location information of the first terminal device according to the first sidelink information, and transmits the first indication information for instructing the first terminal device to trigger the sidelink establishment procedure to the first terminal according to the terminal location information of the first terminal device. The first access device transmits the first indication information to the first terminal device according to the terminal location information of the first terminal device. Therefore, continuous transmissions of a request message for establishing the sidelink are not required. In addition, after the first terminal device switches to the cell of the third access network device, the first access network device transmits the first sidelink information to the third access network device, so that the first terminal device does not need to transmit continuously the request message for establishing the sidelink after switching, thereby saving power of the first terminal device and radio resources.

Referring to FIG. 5, FIG. 5 is a schematic structural diagram of a first access network device provided in embodiments of the disclosure. As illustrated in FIG. 5, the first access network device 50 includes an indication-information transmitting module 501 configured to transmit first indication information to a first terminal device, where the first indication information instructs the first terminal device to trigger a sidelink establishment procedure.

In specific implementations, the first access network device 50 may execute each operation performed by the first access network device in the method for establishing a sidelink shown in FIG. 2 to FIG. 4 through built-in functional modules, and implementation details may be referred to the implementation details of each operation in embodiments corresponding to FIG. 2 to FIG. 4, which will not be repeated herein.

In embodiments of the disclosure, the first access network device transmits the first indication information to the first terminal device, where the first indication information instructs the first terminal device to trigger the sidelink establishment procedure. Under the trigger of the first indication information, the first terminal device triggers the sidelink establishment procedure without continuously transmitting a request message for establishing the sidelink, thereby saving power of the first terminal device and radio resources.

In some implementations, the first access network device 50 illustrated in FIG. 5 may be the first access network device 001 shown in FIG. 1, such as a base station, etc., or may be a part of the first access network device 001, such as a part of the base station. In other implementations, the first access network device 50 illustrated in FIG. 5 may be a chip, a chip module, a chip system, or a part of a chip.

Each module included in the first access network device 50 described in the foregoing embodiments may be a software module, a hardware module, or a part of a software module and a part of a hardware module. For example, for each apparatus or product applied to or integrated in a chip, each module contained therein may be implemented by hardware such as circuits, or at least some of the modules may be implemented by a software program that runs on a processor integrated in the chip, and the remaining (if any) modules may be implemented by hardware such as circuits. For each apparatus and product applied to or integrated in the chip module, each module contained therein may be implemented by hardware such as circuits, different modules may be located in a same component (such as a chip, circuit module, etc.) or different components of the chip module, or at least some modules may be implemented by a software program that runs on a processor integrated in the chip module, and the remaining (if any) modules may be implemented by hardware such as circuits. For each apparatus and product applied to or integrated in the terminal, each module contained therein may be implemented by hardware such as circuits, and different modules can be located in a same component (for example, chip, circuit module, etc.) or different components in the terminal, or at least some of the modules may be implemented in the form of software programs that run on the processor integrated inside the terminal, and the remaining (if any) modules may be implemented by hardware such as circuits.

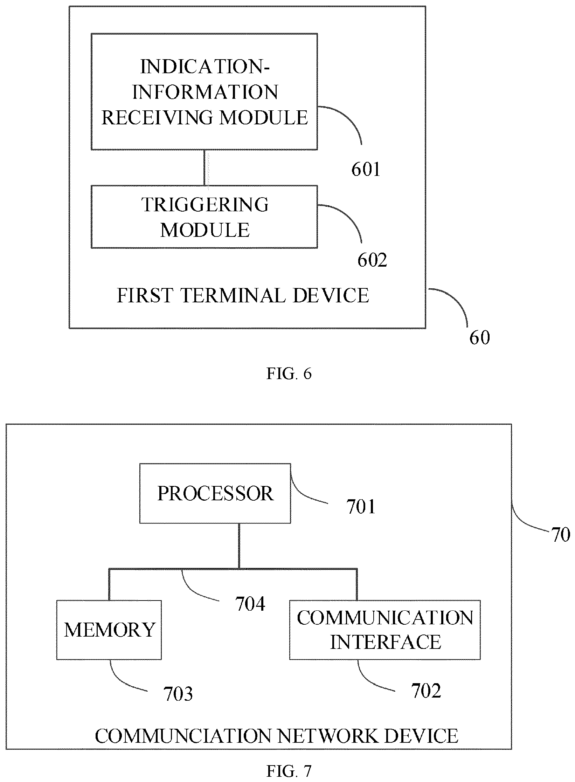

Referring to FIG. 6, FIG. 6 is a schematic structural diagram of a first terminal device provided in embodiments of the disclosure. As illustrated in FIG. 6, the first terminal device 60 includes an indication-information receiving module 601 and a triggering module 602.

The indication-information receiving module 601 is configured to receive first indication information from a first access network device.

The triggering module 602 is configured to trigger a sidelink establishment procedure according to the first indication information.

In specific implementations, the first terminal device 60 may execute each operation performed by the first terminal device in the method for establishing a sidelink shown in FIG. 2 to FIG. 4 through built-in functional modules, and implementation details may be referred to the implementation details of each operation in embodiments corresponding to FIG. 2 to FIG. 4, which will not be repeated herein.

In embodiments of the disclosure, after the indication-information receiving module 601 receives the first indication information from the first access network device, the triggering module 602 triggers the sidelink establishment procedure according to the first indication information. Under the trigger of the first indication information, the first terminal device triggers the sidelink establishment procedure without continuously transmitting a request message for establishing the sidelink, thereby saving power of the first terminal device and radio resources.

In some implementations, the first terminal device 60 shown in FIG. 6 may be the first terminal device 002 shown in FIG. 1, such as a mobile phone, a mobile station, etc., or a part of the first terminal device 002, such as a part of the mobile phone. In other implementations, the first terminal device 60 shown in FIG. 6 may be a chip, a chip module, a chip system, or a part of a chip.

Each module included in the first terminal device 60 described in the foregoing embodiments may be a software module, a hardware module, or a part of a software module and a part of a hardware module. For example, for each apparatus or product applied to or integrated in a chip, each module contained therein may be implemented by hardware such as circuits, or at least some of the modules may be implemented by a software program that runs on a processor integrated in the chip, and the remaining (if any) modules may be implemented by hardware such as circuits. For each apparatus and product applied to or integrated in the chip module, each module contained therein may be implemented by hardware such as circuits, different modules may be located in a same component (such as a chip, circuit module, etc.) or different components of the chip module, or at least some modules may be implemented by a software program that runs on a processor integrated in the chip module, and the remaining (if any) modules may be implemented by hardware such as circuits. For each apparatus and product applied to or integrated in the terminal, each module contained therein may be implemented by hardware such as circuits, and different modules can be located in a same component (for example, chip, circuit module, etc.) or different components in the terminal, or at least some of the modules may be implemented in the form of software programs that run on the processor integrated inside the terminal, and the remaining (if any) modules may be implemented by hardware such as circuits.

Referring to FIG. 7, FIG. 7 is a schematic structural diagram of a communication network device provided in embodiments of the disclosure. As shown in FIG. 7, the communication network device 70 may include a processor 701, a communication interface 702 and a memory 703. For example, the processor 701, the communication interface 702 and the memory 703 are coupled through a bus 704.

The memory 703 may include, but is not limited to, random access memory (RAM), erasable programmable read-only memory (EPROM), read-only memory (ROM), or compact disc read-only memory (CD-ROM), etc. The memory 703 is configured for storing related instructions and data.

The processor 701 may be one or more central processing units (CPUs). If the processor 701 is one CPU, the CPU may be a single-core CPU or a multi-core CPU.

The processor 701 is configured to read the program code stored in the memory 703, and cooperate with the communication interface 702 to execute part or all of the operations of the method executed by the communication network device 70 in the foregoing embodiments of the disclosure.

In an implementation, the communication network device 70 may be applied to the first access network device 001 in the embodiment corresponding to FIG. 1. In the communication network device 70 shown in FIG. 7, the communication interface 702 is mainly configured for connecting with terminal device or other access network device, and the processor 701 can be configured to invoke the device-control application program stored in the memory 703 to transmit first indication information to a first terminal device, the first indication information instructing the first terminal device to trigger a sidelink establishment procedure.

In another implementation, the communication network device 70 may be applied to the first terminal device 002 in the above-mentioned embodiment corresponding to FIG. 1. In the communication network device 70 shown in FIG. 7, the communication interface 702 is mainly configured for connecting with the network access device or establishing a sidelink with other terminal devices. The processor 701 can be configured to invoke the device-control application program stored in the memory 703 to receive first indication information from a first access network device, and trigger a sidelink establishment procedure according to the first indication information.

It should be understood that the communication network device 70 described in the embodiments of the disclosure may execute operations described in the method for establishing a sidelink in the foregoing embodiments corresponding to FIG. 2 to FIG. 4, and may also execute operations described in the foregoing embodiments of the first access network device 50 corresponding to FIG. 5 or the first terminal device 60 corresponding to FIG. 6, which will not be repeated herein. In addition, the description of the beneficial effects of using the same method will not be repeated.

In addition, it should be noted that the disclosure further provides a computer storage medium, and the computer storage medium stores a computer program executed by the aforementioned communication network device 70. The computer program includes program instructions which, when executed by a processor, can cause the processor to execute the method for establishing a sidelink in the foregoing embodiments corresponding to FIG. 2 to FIG. 4, and therefore will not be repeated here. In addition, the description of the beneficial effects of using the same method will not be repeated. For technical details not disclosed in the computer storage medium embodiments involved in the disclosure, reference may be made to the description of the method embodiments of the disclosure.

The disclosure also provides a computer program product, which can execute the method for establishing a sidelink designed for the communication network device 70 in the embodiment shown in FIG. 7 when the computer product is run by the communication network device.

The terms "first", "second", "third" and "fourth" in the description and claims of the disclosure and the drawings are used to distinguish different objects, rather than to describe a specific order. Furthermore, the terms "comprising" and "having" and any variations thereof are intended to cover non-exclusive inclusion. For example, a process, method, system, product or device comprising a series of steps or units is not limited to the listed steps or units, but optionally also includes unlisted steps or units, or optionally also includes other steps or units inherent to these processes, methods, products or devices.

Those of ordinary skill in the art can understand that all or part of the processes in the methods of the above embodiments can be implemented by instructing relevant hardware through a computer program, and the program can be stored in a computer-readable storage medium. During execution, the processes of the embodiments of the above-mentioned methods may be included. The storage medium may be a magnetic disk, an optical disk, a read-only memory (ROM), or a random access memory (RAM) or the like.

The above disclosure is only some embodiments of the disclosure, and certainly cannot limit the scope of the disclosure. Therefore, the equivalent changes made according to the claims of the disclosure are still within the scope of the disclosure.

## Claims

1. A method for establishing a sidelink, comprising:
transmitting, by a first access network device, first indication information to a first terminal device, the first indication information instructing the first terminal device to trigger a sidelink establishment procedure.

2. The method of claim 1, wherein transmitting, by the first access network device, the first indication information to the first terminal device comprises:
obtaining, by the first access network device, terminal location information of the first terminal device; and
transmitting, by the first access network device, the first indication information to the first terminal device according to the terminal location information of the first terminal device.

3. The method of claim 2, wherein obtaining, by the first access network device, the terminal location information of the first terminal device comprises:
obtaining, by the first access network device, one or two of: global positioning system (GPS) information of the first terminal device, a zone ID of the first terminal device, a power reference signal of the first terminal device, and beam information of the first terminal device.

4. The method of claim 1, wherein prior to transmitting, by the first access network device, the first indication information to the first terminal device, the method further comprises:
receiving, by the first access network device, first sidelink information transmitted from a core network device or the first terminal device; and
transmitting, by the first access network device, the first indication information to the first terminal device comprises:
transmitting, by the first access network device, the first indication information to the first terminal device according to the first sidelink information.

5. The method of claim 4, wherein the first sidelink information comprises one or more of: a temporary mobile subscriber identity (TMSI), a radio network temporary identity (RNTI), an international mobile subscriber identity (IMSI), a flow identity (ID), a data radio bearer (DRB) ID, a destination ID, or a source ID.

6. The method of claim 4, wherein the first indication information carries one or more of: a flow ID, a DRB ID, a destination ID, or a source ID.

7. The method of claim 2, wherein
the first indication information instructs the first terminal device to trigger the sidelink establishment procedure with a second terminal device;
the method further comprises:
receiving, by the first access network device, terminal location information of a second terminal device transmitted by a second access network device, the second access network device being an access network device connected with the second terminal device; and
transmitting, by the first access network device, the first indication information to the first terminal device according to the terminal location information of the first terminal device comprises:
transmitting, by the first access network device, the first indication information to the first terminal device according to the terminal location information of the first terminal device and the terminal location information of the second terminal device.

8. The method of claim 1, wherein the first indication information carries a first gap ID and/or a first resource ID, wherein the first gap ID indicates a gap in which the first terminal device establishes the sidelink establishment procedure, and the first source ID indicates a radio resource with which the first terminal device establishes the sidelink establishment procedure.

9. The method of any of claims 1-8, wherein the first indication information is one of a radio resource control (RRC) message, media access control (MAC) control element (CE) information, or downlink control information (DCI).

10. The method of claim 4 or 5, further comprising:
transmitting, by the first access network device, the first sidelink information to a third access network device, the third access network device being an access network device to which a connection is switched by the first terminal device.

11. A method for establishing a sidelink, comprising:
receiving, by a first terminal device, first indication information from a first access network device; and
triggering, by the first terminal device, a sidelink establishment procedure according to the first indication information.

12. The method of claim 11, further comprising:
transmitting, by the first terminal device, terminal location information of the first terminal device to the first access network device.

13. The method of claim 12, wherein the terminal location information of the first terminal device comprises one or two of: global positioning system (GPS) information of the first terminal device, a zone ID of the first terminal device, a power reference signal of the first terminal device, and beam information of the first terminal device.

14. The method of claim 11, wherein the first indication information is transmitted by the first access network device according to first sidelink information; and
prior to receiving, by the first terminal device, the first indication information from the first access network device, the method further comprises:
transmitting, by the first terminal device, the first sidelink information to the first access network device.

15. The method of claim 14, wherein the first sidelink information comprises one or more of: a temporary mobile subscriber identity (TMSI), a radio network temporary identity (RNTI), an international mobile subscriber identity (IMSI), a flow identity (ID), a data radio bearer (DRB) ID, a destination ID, or a source ID.

16. The method of claim 11, wherein the first indication information carries one or more of: a flow ID, a DRB ID, a destination ID, or a source ID.

17. The method of claim 11, wherein the first indication information carries a first gap ID and/or a first resource ID, wherein the first gap ID indicates a gap in which the first terminal device establishes the sidelink establishment procedure, and the first source ID indicates a radio resource with which the first terminal device establishes the sidelink establishment procedure.

18. The method of any of claims 11-17, wherein the first indication information is one of a radio resource control (RRC) message, media access control (MAC) control element (CE) information, or downlink control information (DCI).

19. A first access network device, comprising:
an indication-information transmitting module configured to transmit first indication information to a first terminal device, the first indication information instructing the first terminal device to trigger a sidelink establishment procedure.

20. A first terminal device, comprising:
an indication-information receiving module configured to receive first indication information from a first access network device; and
a triggering module configured to trigger a sidelink establishment procedure according to the first indication information.

21. A communication network device, comprising:
a processor; and
a memory coupled with the processor and storing program codes,
wherein the processor is configured to invoke the program codes to perform the method of any of claims 1-10 or the method of any of claims 11-18.

22. A computer-readable storage medium storing a computer program, the computer program being executed by a processor to implement the method of any of claims 1-10 or the method of any of claims 11-18.
